# EUROPÄISCHE PATENTANMELDUNG

(11) **EP 4 643 650 A1**
(43) Veröffentlichungstag der Anmeldung: **05.11.2025**
(21) Anmeldenummer: 24173864.0
(22) Anmeldetag: 02.05.2024
(51) Int. Cl.: A23K 10/30, A23K 40/25, A23K 50/42, A23P 30/20

(54) **TIERSNACK UND VERFAHREN ZUR HERSTELLUNG EINES TIERSNACKS**

(71) Anmelder: Novel Vegan Crafts GmbH & Co. KG, 48155 Münster (DE)
(72) Erfinder: ENTEMEIER, Deria, 48739 Legden (DE)
(74) Vertreter: Andrejewski - Honke Patent- und Rechtsanwälte Partnerschaft mbB

(57) **Zusammenfassung**

Die Erfindung betrifft einen Tiersnack. Der Tiersnack weist 20 bis 55 Gew.-% Gluten, 3 bis 25 Gew.-% Glycerin, 1 bis 20 Gew.-% zumindest eines Füllstoffes und weniger als 14 Gew.-% Wasser auf.

## Beschreibung

Die Erfindung betrifft einen Tiersnack und ein Verfahren zur Herstellung eines Tiersnacks. Tiersnacks sind Futtermittel für Tiere, die als Ergänzung zum Basisfutter, beispielsweise als Zwischenmahlzeit und/oder als Belohnung, verwendet werden. Bevorzugt handelt es sich bei dem erfindungsgemäßen Tiersnack um einen Heimtiersnack. Der erfindungsgemäße Tiersnack bzw. Heimtiersnack ist insbesondere für Hunde und/oder Katzen vorgesehen.

Tiersnacks, insbesondere Heimtiersnacks, und Verfahren zur Herstellung von solchen Tiersnacks sind aus der Praxis in unterschiedlichen Ausführungsformen grundsätzlich bekannt. Die aus der Praxis bekannten Tiersnacks sind üblicherweise auf Basis von Fleisch erzeugt und weisen somit einen nicht unerheblichen Fleischanteil auf. Demgegenüber besteht zunehmender Bedarf an zumindest fleischreduzierten, insbesondere an vegetarischen, bevorzugt an veganen, Futtermitteln für Tiere, insbesondere für Heimtiere. Bei Tiersnacks, die zumindest fleischreduziert und insbesondere vegetarisch, bevorzugt vegan, sind, ist es erforderlich, dass die Tiere die Tiersnacks im Hinblick auf ihre Konsistenz und ihren Geschmack akzeptieren. Darüber hinaus ist es wünschenswert, dass die Inhaltsstoffe der Tiersnacks für den tierischen Stoffwechsel geeignet sind und dass die Tiersnacks insbesondere einen hohen Proteingehalt aufweisen. Mit den aus der Praxis bekannten Maßnahmen konnte bisher kein fleischreduzierter und insbesondere kein vegetarischer oder veganer Tiersnack bereitgestellt werden, der einen optimalen Kompromiss hinsichtlich der Konsistenz, des Geschmacks und der Inhaltsstoffe ermöglicht. - Hier setzt die Erfindung ein.

Der Erfindung liegt demgegenüber das technische Problem zugrunde, einen Tiersnack bereitzustellen, der zumindest fleischreduziert und insbesondere vegetarisch, bevorzugt vegan, ist und der sich durch einen optimalen Kompromiss aus Konsistenz, Geschmack und den verwendeten Inhaltsstoffen bzw. Komponenten auszeichnet. Darüber hinaus liegt der Erfindung das technische Problem zugrunde, ein Verfahren zur Herstellung eines Tiersnacks anzugeben.

Zur Lösung des technischen Problems lehrt die Erfindung einen Tiersnack, insbesondere einen Heimtiersnack, wobei der Tiersnack
- 20 bis 55 Gew.-%, vorzugsweise 25 bis 50 Gew.-%, Gluten,
- 3 bis 25 Gew.-%, vorzugsweise 5 bis 20 Gew.-%, Glycerin,
- 1 bis 20 Gew.-%, bevorzugt 2 bis 18 Gew.-%, zumindest eines Füllstoffes,
- vorzugsweise 0,5 bis 12 Gew.-%, bevorzugt 1 bis 10 Gew.-%, zumindest einer Hefekomponente und
- weniger als 14 Gew.-%, vorzugsweise weniger als 12 Gew.-%, Wasser
aufweist.

Hier und nachfolgend beziehen sich die Anteile der Komponenten des Tiersnacks insbesondere jeweils auf die im fertigen Tiersnack bzw. im Endprodukt enthaltenen Komponenten. Es ist im Rahmen der Erfindung bevorzugt, dass der Tiersnack ein extrudierter Tiersnack ist und dass die hier und nachfolgend angegebenen Anteile der Komponenten des Tiersnacks sich vorzugsweise auf den fertigen Tiersnack nach der Extrusion beziehen. Es versteht sich im Übrigen, dass sich die hier angegebenen Komponenten sowie etwaige weitere Komponenten des Tiersnacks insgesamt insbesondere zu 100 Gew.-% ergänzen.

Erfindungsgemäß weist der Tiersnack 20 bis 55 Gew.-%, vorzugsweise 25 bis 50 Gew.-%, Gluten auf. Bevorzugt weist der Tiersnack 30 bis 45 Gew.-%, sehr bevorzugt 35 bis 45 Gew.-% Gluten, auf. Es ist ganz besonders bevorzugt, dass Gluten die Hauptkomponente des Tiersnacks ist. Hauptkomponente meint dabei insbesondere, dass das Gluten im Vergleich zur den Übrigen Komponenten des Tiersnacks den größten Massenanteil ausmacht. Gemäß bevorzugter Ausführungsform der Erfindung handelt es sich bei dem Gluten um Weizengluten. Grundsätzlich können im Rahmen der Erfindung aber auch andere Glutene eingesetzt werden, beispielsweise Roggengluten und/oder Gerstengluten und dergleichen sowie Mischungen der vorstehend genannten Glutene. Wenn eine Mischung verschiedener Glutene eingesetzt wird, beziehen sich die hier und nachfolgend angegebenen Massenanteile insbesondere auf den Gesamtmassenanteil des Glutens, das der Tiersnack aufweist.

Erfindungsgemäß weist der Tiersnack weniger als 14 Gew.-%, vorzugsweise weniger als 12 Gew.-% Wasser auf. Bevorzugt weist der Tiersnack weniger als 10 Gew.-% Wasser auf und sehr bevorzugt weist der Tiersnack weniger als 9 Gew.-% Wasser auf. Es hat sich bewährt, dass der Tiersnack zwischen 1 und 14 Gew.-%, vorzugsweise 2 bis 12 Gew.-%, bevorzugt 4 bis 10 Gew.-%, weiter bevorzugt 5 bis 9 Gew.-%, Wasser aufweist.

Erfindungsgemäß weist der Tiersnack 3 bis 25 Gew.-%, vorzugsweise 5 bis 20 Gew.-%, Glycerin auf. Bevorzugt weist der Tiersnack 8 bis 17 Gew.-%, weiter bevorzugt 10 bis 16 Gew.-%, Glycerin auf. Bei dem Glycerin handelt es sich gemäß bevorzugter Ausführungsform um pflanzliches Glycerin bzw. um auf Pflanzenbasis erzeugtes Glycerin. Grundsätzlich liegt aber auch die Verwendung von petrochemisch erzeugtem Glycerin im Rahmen der Erfindung.

Erfindungsgemäß weist der Tiersnack 1 bis 20 Gew.-%, vorzugsweise 2 bis 18 Gew.-%, zumindest eines Füllstoffes auf. Es ist weiter bevorzugt, dass der Tiersnack 5 bis 17 Gew.-%, sehr bevorzugt 8 bis 16 Gew.-% zumindest eines Füllstoffes aufweist.

Vorzugsweise weist der Tiersnack 0,5 bis 12 Gew.-%, bevorzugt 1 bis 10 Gew.-%, zumindest einer Hefekomponente auf. Es ist bevorzugt, dass der Tiersnack 1 bis 6 Gew.-%, sehr bevorzugt 1,2 bis 5 Gew.-%, ganz besonders bevorzugt 1,5 bis 4 Gew.-%, zumindest einer Hefekomponente aufweist. Wenn der Tiersnack mehr als eine Hefekomponente aufweist, beziehen sich die hier und nachfolgend angegebenen Massenanteile insbesondere auf den Gesamtmassenanteil der Hefekomponenten.

Die Erfindung hat erkannt, dass durch die Verwendung von Gluten, vorzugsweise von Weizengluten, für den Tiersnack, bevorzugt als Hauptkomponente des Tiersnacks, - insbesondere in Zusammenwirkung mit dem Glycerin und dem Wasser - eine sehr vorteilhafte Konsistenz des resultierenden Tiersnacks erreicht werden kann. Das Gluten ist dabei zweckmäßigerweise eine strukturgebende Komponente des Tiersnacks und baut in Zusammenwirkung mit Glycerin und Wasser bevorzugt eine elastische Bindung auf, aus der sich eine vorteilhafte Konsistenz des Tiersnacks ergibt. Der erfindungsgemäß vorgesehene zumindest eine Füllstoff trägt in Zusammenwirkung mit zumindest den Komponenten Gluten, Glycerin und Wasser bevorzugt ebenfalls zu einer vorteilhaften Struktur bzw. Konsistenz des Tiersnacks bei. Die bevorzugt vorgesehene zumindest eine Hefekomponente ist insbesondere für die Geschmacksgebung verantwortlich, sodass ein Tiersnack mit einer vorteilhaften und von Tieren akzeptierten Konsistenz sowie einem von den Tieren akzeptierten Geschmack resultiert, der fleischreduziert und vorzugsweise vegetarisch, bevorzugt vegan, ist. Fleischreduziert meint im Rahmen der Erfindung im Übrigen insbesondere, dass der Tiersnack weniger als 15 Gew.-%, vorzugsweise weniger als 10 Gew.-%, bevorzugt weniger als 5 Gew.-%, sehr bevorzugt weniger als 2 Gew.-%, ganz besonders bevorzugt weniger als 1 Gew.-%, Fleisch aufweist.

Eine ganz besonders bevorzugte Ausführungsform des erfindungsgemäßen Tiersnacks ist dadurch gekennzeichnet, dass der Tiersnack ein vegetarischer Tiersnack, vorzugsweise ein veganer Tiersnack, ist. Gemäß ganz besonders bevorzugter Ausführungsformen der Erfindung handelt es sich bei dem erfindungsgemäßen Tiersnack um einen veganen Tiersnack, der somit insbesondere keine Komponenten bzw. Inhaltsstoffe tierischen Ursprungs aufweist.

Es ist bevorzugt, dass der Tiersnack zumindest ein Additiv zur Aromatisierung und/oder zur Färbung des Tiersnacks aufweist. Bevorzugt weist der Tiersnack 0,5 bis 8 Gew.-%, besonders bevorzugt 1 bis 5 Gew.-%, zumindest eines Additivs zur Aromatisierung und/oder zur Färbung des Tiersnacks auf. Bei dem zumindest einen Additiv zur Aromatisierung und/oder zur Färbung des Tiersnacks handelt es sich gemäß einer Ausführungsform um zumindest ein pflanzliches Additiv zur Aromatisierung und/oder zur Färbung des Tiersnacks. Gemäß einer weiteren bevorzugten Ausführungsform der Erfindung handelt es sich bei dem zumindest einen Additiv zur Aromatisierung und/oder zur Färbung des Tiersnacks um Salz und/oder um zumindest einen Mineralstoff und/oder um zumindest ein Gewürz. Wenn der Tiersnack mehr als ein Additiv zur Aromatisierung und/oder zur Färbung des Tiersnacks aufweist, beziehen sich die hier und nachfolgend angegebenen Massenanteile insbesondere auf den Gesamtmassenanteil der Additive.

Es ist im Rahmen der Erfindung bevorzugt, dass der Tiersnack einen Rohproteingehalt von mehr als 23 Gew.-%, vorzugsweise von mehr als 25 Gew.-%, bevorzugt von mehr als 30 Gew.-%, sehr bevorzugt von mehr als 35 Gew.-%, beispielsweise von mehr als 40 Gew.-%, aufweist. Es hat sich bewährt, dass der Rohproteingehalt des Tiersnacks 25 bis 60 Gew.-%, vorzugsweise 30 bis 55 Gew.-%, bevorzugt 35 bis 50 Gew.-%, beträgt. Der Rohproteingehalt bezieht sich dabei insbesondere auf den fertigen Tiersnack.

Gemäß einer bevorzugten Ausführungsform des erfindungsgemäßen Tiersnacks weist der Tiersnack 0,2 bis 10 Gew.-%, vorzugsweise 0,5 bis 8 Gew.-%, bevorzugt 1 bis 7 Gew.-%, weiter bevorzugt 2 bis 6 Gew.-%, beispielsweise 3 bis 6 Gew.-%, zumindest eines Fettes auf. Dieser Ausführungsform liegt die Erkenntnis zugrunde, dass durch das zumindest eine Fett die Konsistenz des Tiersnacks weiter verbessert werden kann und dass insbesondere die Weichheit des Tiersnacks eingestellt, insbesondere erhöht, werden kann. Gemäß sehr bevorzugter Ausführungsform der Erfindung handelt es sich bei dem zumindest einen Fett um zumindest ein pflanzliches Fett, vorzugsweise um Rapsöl und/oder Sonnenblumenöl und/oder Kokosfett. Grundsätzlich liegen aber auch andere Fette, insbesondere andere pflanzliche Fette, im Rahmen der Erfindung. Wenn der Tiersnack mehr als ein Fett aufweist, beziehen sich die hier und nachfolgend angegebenen Massenanteile insbesondere auf den Gesamtmassenanteil der Fette.

Es ist bevorzugt, dass es sich bei dem zumindest einen Füllstoff um zumindest einen Füllstoff auf Pflanzenbasis handelt. Sehr bevorzugt ist der zumindest eine Füllstoff zumindest ein pflanzliches Texturat, bevorzugt zumindest ein Weizentexturat, und/oder zumindest ein pflanzlicher Trester, bevorzugt zumindest ein Frucht- und/oder Gemüsetrester. Der zumindest eine Füllstoff, insbesondere das zumindest eine pflanzliche Texturat und/oder der zumindest eine pflanzliche Trester, tragen im Rahmen der Erfindung vorzugsweise zu einer weiteren Strukturverbesserung des Tiersnacks bei. Pflanzliche Texturate und/oder Trester zeichnen sich insbesondere durch ihre verhältnismäßig grobe Struktur aus und verbessern somit vorzugsweise die Verarbeitbarkeit der Komponenten des Tiersnacks sowie der daraus erzeugten Mischung und/oder die Struktur des fertigen Tiersnacks. Wenn als Füllstoff gemäß bevorzugter Ausführungsform ein Weizentexturat verwendet wird, kann dadurch außerdem der Proteingehalt des Tiersnacks weiter erhöht werden. Bei dem Weizentexturat handelt es sich bevorzugt um ein texturiertes Weizenprotein. Gemäß einer bevorzugten Ausführungsform der Erfindung weist der Tiersnack zumindest zwei Füllstoffe - vorzugsweise zumindest ein Weizentexturat und einen Obsttrester - auf. Wenn der Tiersnack mehr als einen Füllstoff aufweist, beziehen sich die angegebenen Massenanteile insbesondere auf den Gesamtmassenanteil der Füllstoffe.

Eine besonders bevorzugte Ausführungsform der Erfindung ist dadurch gekennzeichnet, dass es sich bei der zumindest einen Hefekomponente um Bierhefe und/oder um Hefeextrakt und/oder um Hefeflocken handelt. Die zumindest eine Hefekomponente dient im Rahmen der Erfindung bevorzugt als geschmacksgebende, insbesondere den Geschmack des Tiersnacks verbessernde, Komponente.

Es liegt im Rahmen der Erfindung, dass der Tiersnack 1 bis 20 Gew.-% zumindest eines Zusatzproteins und/oder 1 bis 20 Gew.-% zumindest eines stärkehaltigen Mehls aufweist. Vorzugsweise ist das zumindest eine Zusatzprotein zumindest ein aus der Gruppe: "Erbsenprotein, Reisprotein, Kartoffelprotein" ausgewähltes Zusatzprotein. Weiter bevorzugt ist das zumindest eine stärkehaltige Mehl zumindest ein aus der Gruppe: "Kartoffelmehl, Karottenmehl, Bananenmehl, Kichererbsenmehl, Maismehl, Reismehl, Ackerbohnenmehl" ausgewähltes stärkehaltiges Mehl. Der Ausführungsform mit zumindest einem Zusatzprotein liegt die Erkenntnis zugrunde, dass dadurch vorzugsweise der Proteingehalt des Tiersnacks weiter erhöht werden kann, ohne dass der Glutengehalt, der insbesondere die Struktur des Tiersnacks beeinflusst, weiter erhöht wird. Gemäß bevorzugter Ausführungsform weist der Tiersnack 1 bis 15 Gew.-% des zumindest einen Zusatzproteins und/oder 1 bis 15 Gew.-%, vorzugsweise 5 bis 15 Gew.-%, des zumindest einen stärkehaltigen Mehls auf. Wenn der Tiersnack mehr als ein Zusatzprotein und/oder mehr als ein stärkehaltiges Mehl aufweist, beziehen sich die hier und nachfolgend angegebenen Massenanteile insbesondere jeweils auf den Gesamtmassenanteil der Zusatzproteine bzw. der stärkehaltigen Mehle.

Es ist im Rahmen der Erfindung bevorzugt, dass es sich bei dem Gluten und/oder bei dem zumindest einen Füllstoff und/oder bei der zumindest einen Hefekomponente und/oder bei dem zumindest einen Zusatzprotein und/oder bei dem zumindest einen stärkehaltigen Mehl und/oder bei dem zumindest einen Additiv zur Aromatisierung und/oder zur Färbung des Tiersnacks um einen Trockenstoff/um Trockenstoffe handelt. Trockenstoff meint in diesem Zusammenhang insbesondere eine Feststoffkomponente, die vorzugsweise lediglich einen Restwasseranteil aufweist.

Es ist bevorzugt, dass der Tiersnack ein thermisch behandelter Tiersnack ist und dass der Tiersnack zweckmäßigerweise ein thermisch behandelter, extrudierter Tiersnack ist, der vorzugsweise im Rahmen des Extrusionsprozesses, besonders bevorzugt im Extruder, thermisch behandelt, insbesondere wärmebehandelt, ist. Bei dem Gluten, das der erfindungsgemäße Tiersnack aufweist, handelt es sich dann zweckmäßigerweise zumindest teilweise um denaturiertes Gluten. Durch die Denaturierung des Glutens kann die Konsistenz bzw. die Struktur des fertigen Tiersnacks im Rahmen der Erfindung beeinflusst werden, sodass eine von den Tieren akzeptierte, gleichsam fleischähnliche Konsistenz des Tiersnacks resultiert.

Grundsätzlich liegen hinsichtlich der Abmessungen und der geometrischen Ausgestaltung des Tiersnacks verschiedenste Ausgestaltungen im Rahmen der Erfindung. Vorzugsweise wird ein Tiersnackstrang extrudiert und unmittelbar nach der Extrusion in den Tiersnack getrennt, insbesondere geschnitten. Das wird unten stehend noch näher erläutert. Es ist bevorzugt, dass der Tiersnack eine längliche Form aufweist und vorzugsweise als zumindest eine Tiersnackstange ausgebildet ist, wobei der Tiersnack, insbesondere die zumindest eine Tiersnackstange, eine Länge von zumindest 3 cm, vorzugsweise von zumindest 5 cm, bevorzugt von zumindest 7 cm, besonders bevorzugt von zumindest 8 cm aufweist und/oder wobei der Tiersnack, insbesondere die zumindest eine Tiersnackstange, einen Durchmesser von zumindest 0,2 cm, bevorzugt von zumindest 0,3 cm, besonders bevorzugt von zumindest 0,4 cm, beispielsweise von zumindest 0,5 cm aufweist. Länge des Tiersnacks meint im Rahmen der Erfindung insbesondere die größte Erstreckung des Tiersnacks in Längsrichtung. Durchmesser des Tiersnacks meint im Rahmen der Erfindung insbesondere den größten Durchmesser quer, insbesondere senkrecht bzw. im Wesentlichen senkrecht zu der Längserstreckung des Tiersnacks.

Es liegt gemäß einer alternativen Ausführungsform im Rahmen der Erfindung, dass der Tiersnack würfelförmig bzw. im Wesentlichen würfelförmig ausgebildet ist und vorzugsweise eine Kantenlänge von 3 mm bis 20 mm, bevorzugt von 5 mm bis 15 mm, besonders bevorzugt von 8 mm bis 12 mm, aufweist. Grundsätzlich liegen aber auch andere geometrische Ausgestaltungen des Tiersnacks im Rahmen der Erfindung.

Zur Lösung des technischen Problems lehrt die Erfindung außerdem ein Verfahren zur Herstellung eines Tiersnacks, vorzugsweise eines Heimtiersnacks, insbesondere eines oben stehend beschriebenen Tiersnacks, wobei der Tiersnack mittels zumindest eines Extruders erzeugt, insbesondere extrudiert, wird, wobei dazu eine Mischung aus zumindest Gluten, zumindest einem Füllstoff, Wasser und vorzugsweise zumindest einer Hefekomponente durch den Extruder gefördert wird, wobei die Mischung außerdem Glycerin aufweist und/oder wobei der Mischung - vorzugsweise in dem Extruder - Glycerin zugegeben wird, wobei der Extruder zumindest zwei, vorzugsweise zumindest drei, in Förderrichtung der Mischung durch den Extruder hintereinander angeordnete Temperaturzonen aufweist, in denen die Mischung thermisch behandelt wird und wobei die Temperatur in jeder der Temperaturzonen des Extruders geringer ist als 99 °C, insbesondere geringer ist als 97 °C, vorzugsweise geringer ist als 95 °C, bevorzugt geringer ist als 90 °C, weiter bevorzugt geringer ist als 80 °C, sehr bevorzugt geringer ist als 75 °C, besonders bevorzugt geringer ist als 70 °C, ganz besonders bevorzugt geringer ist als 65 °C, beispielsweise geringer ist als 60 °C.

Bevorzugt weist die Mischung, die durch den Extruder gefördert wird, außerdem zumindest ein Zusatzprotein und/oder zumindest ein stärkehaltiges Mehl und/oder zumindest ein Additiv zur Aromatisierung und/oder zur Färbung des Tiersnacks auf. Weiter bevorzugt weist die Mischung zumindest ein flüssiges bzw. verflüssigtes Fett auf und/oder wird der Mischung - vorzugsweise in dem Extruder - zumindest ein flüssiges bzw. verflüssigtes Fett zugegeben. Bei dem Fett handelt es sich insbesondere um Rapsöl und/oder Sonnenblumenöl und/oder Kokosfett. Die Zugabe des Fettes erfolgt sehr bevorzugt der Wasserzugabe in Förderrichtung der Mischung durch den Extruder nachgeschaltet und insbesondere in derselben Temperaturzone des Extruders wie die Glycerinzugabe.

Die Ausdrücke Temperaturzone des Extruders und Temperatur in einer Temperaturzone des Extruders beziehen sich im Rahmen der Erfindung insbesondere auf einen Abschnitt des Extruders, in dem die Innenwandung des Extruders die angegebene Temperatur aufweist und in dem die Innenwandung des Extruders vorzugsweise auf die angegebene Temperatur temperiert, insbesondere geheizt und/oder gekühlt, ist/wird. Temperatur in einer Temperaturzone des Extruders meint somit im Rahmen der Erfindung insbesondere die Innenwandtemperatur des Extruders in dieser Temperaturzone des Extruders. Auf die Temperatur der durch den Extruder geförderten Mischung hat neben dieser Innenwandtemperatur insbesondere auch der in dem Extruder bzw. in der jeweiligen Temperaturzone herrschende Massedruck einen Einfluss. In einer Temperaturzone des Extruders wird die durch den Extruder geförderte Mischung vorzugsweise bei der jeweiligen Temperatur bzw. Innenwandtemperatur thermisch behandelt. Eine Temperaturzone des Extruders ist vorzugsweise durch einen (signifikanten) Temperaturübergang der Temperatur, insbesondere der Innenwandtemperatur, und/oder durch einen konstruktiven Übergang - bevorzugt durch eine Ausgestaltung in Kammerform - von einer anderen Temperaturzone getrennt und somit unterscheidbar. Im Rahmen der Erfindung sind eine Einfüllzone des Extruders und die Extrusionsdüse des Extruders vorzugsweise keine Temperaturzonen.

Es liegt im Rahmen der Erfindung, dass zunächst eine Trockenmischung aus zumindest Gluten, dem zumindest einen Füllstoff und vorzugsweise der zumindest einen Hefekomponente - sowie bevorzugt dem zumindest einen Zusatzprotein und/oder dem zumindest einen stärkehaltigen Mehl und/oder zumindest einem Additiv zur Aromatisierung und/oder zur Färbung des Tiersnacks - erzeugt und dem Extruder zugeführt wird und wobei der Trockenmischung, vorzugsweise in dem Extruder, zumindest Wasser und - vorzugsweise der Wasserzugabe nachgeschaltet - Glycerin und bevorzugt zumindest ein flüssiges bzw. verflüssigtes Fett zugeführt wird. Die Trockenmischung wird bevorzugt vor der Einfüllung in den Extruder in einer Mischvorrichtung homogenisiert. Die homogenisierte Trockenmischung wird dem Extruder bevorzugt in einer Einfüllzone zugegeben und vorzugsweise wird in dieser Einfüllzone auch zumindest das Wasser als flüssige Komponente hinzugegeben. Vor den Beginn der Extrusion werden die Temperaturzonen und/oder die zugeordneten Kammern des Extruders zweckmäßigerweise auf die vorgesehenen Temperaturen, insbesondere auf die vorgesehenen Innenwandtemperaturen, temperiert, vorzugsweise geheizt. Glycerin und vorzugsweise zumindest ein flüssiges bzw. verflüssigtes Fett werden der Mischung bevorzugt in Förderrichtung der Mischung durch den Extruder hinter der Einfüllzone zugegeben. Grundsätzlich können das Glycerin und/oder das gemäß bevorzugter Ausführungsform vorgesehene flüssige bzw. verflüssigte Fett aber auch in der Einfüllzone zugegeben werden oder der Mischung bereits vor der Einfüllung in den Extruder zugegeben werden. Das gilt im Übrigen auch für die Zugabe des Wassers, die grundsätzlich auch vor der Einfüllung der Mischung in den Extruder erfolgen kann.

Es liegt im Rahmen der Erfindung, dass der Extruder zumindest vier, bevorzugt zumindest fünf, besonders bevorzugt zumindest sechs, ganz besonders bevorzugt zumindest sieben, beispielsweise acht, Temperaturzonen aufweist. Die Temperatur in den Temperaturzonen des Extruders kann insbesondere einzeln gesteuert bzw. geregelt werden. Es ist in diesem Zusammenhang bevorzugt, dass jeder Temperaturzone des Extruders jeweils zumindest eine Kammer, insbesondere eine Kammer, des Extruders zugeordnet ist, wobei die Kammern in Förderrichtung der Mischung durch den Extruder hintereinander angeordnet sind. Bevorzugt weist der Extruder somit zumindest zwei, insbesondere zumindest drei, vorzugsweise zumindest vier, bevorzugt zumindest fünf, besonders bevorzugt zumindest sechs, ganz besonders bevorzugt zumindest sieben und weiter bevorzugt zumindest acht Kammern auf, denen jeweils eine Temperaturzone zugeordnet ist. Die Kammern des Extruders bzw. deren Innenwandung können insbesondere einzeln - entsprechend der jeweils zugeordneten Temperaturzone - auf die vorgesehene Temperatur temperiert, vorzugsweise geheizt und/oder gekühlt, werden. Darüber hinaus weist der Extruder bevorzugt die der ersten Temperaturzone und/oder der ersten Kammer vorgeschaltete Einfüllzone und die der letzten Temperaturzone bzw. der letzten Kammer nachgeschaltete Extrusionsdüse auf. Es liegt im Rahmen der Erfindung, dass auch im Bereich der Einfüllzone und/oder im Bereich der Extrusionsdüse die Temperatur gesteuert bzw. geregelt werden kann.

Eine ganz besonders bevorzugte Ausführungsform der Erfindung ist dadurch gekennzeichnet, dass die Temperatur in jeder der Temperaturzonen des Extruders höher ist als 23 °C, vorzugsweise höher ist als 25 °C, bevorzugt höher ist als 27 °C. Erfindungsgemäß ist die Temperatur in jeder der Temperaturzonen des Extruders geringer als 99 °C, insbesondere geringer als 97 °C, vorzugsweise geringer als 95 °C, bevorzugt geringer als 90 °C, weiter bevorzugt geringer als 80 °C, sehr bevorzugt geringer als 75 °C, besonders bevorzugt geringer als 70 °C, ganz besonders bevorzugt geringer als 65 °C, beispielsweise geringer als 60 °C. Durch die thermische Behandlung der Mischung in zumindest zwei, vorzugsweise in zumindest drei, in Förderrichtung der Mischung durch den Extruder hintereinander angeordneten Temperaturzonen bei diesen Temperaturen erfolgt insbesondere eine niedrigtemperierte thermische Behandlung der Mischung in dem Extruder und somit gemäß bevorzugter Ausführungsform auch eine niedrigtemperierte Denaturierung des Glutens. Daraus resultiert im Rahmen der Erfindung vorzugsweise eine vorteilhafte Konsistenz und insbesondere eine vorteilhafte Elastizität des resultierenden Tiersnacks, die gleichsam fleischähnlich ist und daher besonders gut von den Tieren akzeptiert wird. Wenn die Maximaltemperatur bei der Behandlung der Mischung im Zuge der Förderung durch den Extruder demgegenüber zu hoch ist, führt dies insbesondere zu einer unvorteilhaft starken Expansion beim Austritt aus dem Extruder und dadurch zu einer unvorteilhaften Konsistenz des Tiersnacks. Zu geringe Behandlungstemperaturen der Mischung führen zu einer zu hohen Elastizität des resultierenden Tiersnacks und somit zu einer zu zähen Struktur. Darüber hinaus ist eine gewisse Mindesttemperatur im Zuge der Behandlung der Mischung in dem Extruder vorteilhaft, um eine verbesserte Haltbarkeit des Tiersnacks zu realisieren. Es liegt im Rahmen der Erfindung, dass die Temperatur in zumindest einer Temperaturzone des Extruders zumindest 58 °C, insbesondere zumindest 60 °C, vorzugsweise zumindest 65 °C, bevorzugt zumindest 70 °C, besonders bevorzugt zumindest 75 °C, ganz besonders bevorzugt zumindest 80 °C, weiter bevorzugt zumindest 85 °C, weiter bevorzugt zumindest 90 °C, beispielsweise zumindest 95 °C, beträgt. Bevorzugt beträgt die Temperatur in zumindest einer Temperaturzone des Extruders 58 °C bis 98 °C, insbesondere 60 °C bis 97 °C, vorzugsweise 60 °C bis 95 °C, bevorzugt 65 °C bis 90 °C, besonders bevorzugt 70 °C bis 90 °C.

Gemäß einer Ausführungsform der Erfindung beträgt die Temperatur in derjenigen Temperaturzone des Extruders, die die höchste Temperatur aller Temperaturzonen des Extruders aufweist, 58 °C bis 70 °C, bevorzugt 60 °C bis 65 °C. Gemäß einer alternativen Ausführungsform der Erfindung beträgt die Temperatur in derjenigen Temperaturzone des Extruders, die die höchste Temperatur aller Temperaturzonen des Extruders aufweist, 70 °C bis 98 °C, bevorzugt 75 °C bis 95 °C.

Es liegt im Rahmen des erfindungsgemäßen Verfahrens, dass die Temperatur in der letzten Temperaturzone des Extruders, die insbesondere der Extrusionsdüse unmittelbar vorgeschaltet ist, geringer ist als die Temperatur in zumindest einer, dieser letzten Temperaturzone des Extruders vorgeschalteten Temperaturzone. Zweckmäßigerweise ist dieser letzten Temperaturzone des Extruders auch die letzte Kammer des Extruders zugeordnet. Dieser Ausführungsform des erfindungsgemäßen Verfahrens liegt die Erkenntnis zugrunde, dass die Temperatur dann nicht - wie bei vielen aus der Praxis bekannten Extrusionsverfahren üblich - in der letzten Temperaturzone bzw. in der letzten Kammer unmittelbar vor der Extrusionsdüse am höchsten ist, sondern dass die Temperatur von zumindest einer, der letzten Temperaturzone vorgeschalteten Temperaturzone hin zu der letzten Temperaturzone, die insbesondere unmittelbar der Extrusionsdüse vorgeschaltet ist, sinkt. Dadurch kann die Struktur und Konsistenz des fertigen Tiersnacks weiter verbessert werden.

Es ist besonders bevorzugt, dass der Extruder zumindest drei Temperaturzonen aufweist, wobei die Temperatur vorzugsweise in einer ersten Temperaturzone geringer ist als die Temperatur in einer zweiten, der ersten Temperaturzone in Förderrichtung der Mischung durch den Extruder nachgeschalteten Temperaturzone und wobei die Temperatur in einer dritten, der zweiten Temperaturzone in Förderrichtung der Mischung durch den Extruder nachgeschalteten Temperaturzone vorzugsweise geringer ist als die Temperatur in der zweiten Temperaturzone und besonders bevorzugt höher ist als die Temperatur in der ersten Temperaturzone. Gemäß bevorzugter Ausführungsform der Erfindung weist der Extruder im Rahmen dieser Ausführungsform auch zumindest drei in Förderrichtung der Mischung durch den Extruder hintereinander angeordnete Kammern auf, die den jeweiligen Temperaturzonen zugeordnet sind. Zusätzlich zu den zumindest drei Temperaturzonen und den zumindest drei diesen Temperaturzonen zugeordneten Kammern des Extruders weist der Extruder vorzugsweise eine Einfüllzone und die Extrusionsdüse auf. Im Rahmen der Erfindung ist die Einfüllzone vorzugsweise der ersten Temperaturzone und/oder der ersten Kammer des Extruders unmittelbar vorgeschaltet und die Extrusionsdüse ist vorzugsweise der letzten Temperaturzone und/oder der letzten Kammer des Extruders unmittelbar nachgeschaltet.

Wenn der Extruder gemäß bevorzugter Ausführungsform zumindest drei Temperaturzonen und weiter bevorzugt auch den zumindest drei Temperaturzonen jeweils zugeordnete zumindest drei Kammern, aufweist, ist es besonders bevorzugt, dass die Temperatur in der ersten Temperaturzone 23 °C bis 40 °C, vorzugsweise 25 °C bis 35 °C, beträgt und/oder dass die Temperatur in der zweiten Temperaturzone 55 °C bis 98 °C, insbesondere 58 °C bis 98 °C, vorzugsweise 60 °C bis 95 °C, bevorzugt 70 °C bis 95 °C, beträgt und/oder dass die Temperatur in der dritten Temperaturzone 40 °C bis 60 °C, vorzugsweise 40 °C bis 55 °C beträgt.

Im Rahmen des erfindungsgemäßen Verfahrens wird vorzugsweise ein Tiersnackstrang extrudiert und - vorzugsweise unmittelbar nach dem Austritt aus einer Extrusionsdüse des Extruders - in den Tiersnack getrennt, insbesondere geschnitten. Es ist weiter bevorzugt, dass der Extruder dazu eine Trennvorrichtung, insbesondere eine Schneidvorrichtung aufweist. Es liegt außerdem im Rahmen der Erfindung, dass der Trennvorrichtung nachgeschaltet eine Kühlvorrichtung zur Kühlung des Tiersnacks vorhanden ist.

Es ist bevorzugt, dass der Tiersnack im Rahmen des erfindungsgemäßen Verfahrens mit einem Durchsatz von 15 kg/h bis 50 kg/h, vorzugsweise von 20 kg/h bis 45 kg/h erzeugt bzw. extrudiert wird. Zweckmäßigerweise beträgt die Schneckendrehzahl des Extruders im Rahmen des erfindungsgemäßen Verfahrens 100 U/min bis 400 U/min, bevorzugt 150 U/min bis 320 U/min. Der Massedruck im Extruder beträgt gemäß bevorzugter Ausführungsform 20 bar bis 50 bar, vorzugsweise 25 bar bis 45 bar. Gemäß bevorzugter Ausführungsform wird ein Doppelschneckenextruder eingesetzt. Es liegt im Rahmen der Erfindung, dass als Extruder ein Doppelschneckenextruder ZSE 27 iMAXX von Leistritz eingesetzt wird.

Gemäß einer ganz besonders bevorzugten Ausführungsform des erfindungsgemäßen Verfahrens weist der Extruder zumindest fünf Temperaturzonen auf. Zweckmäßigerweise weist der Extruder auch zumindest fünf den Temperaturzonen jeweils zugeordnete und in Förderrichtung der Mischung durch den Extruder hintereinander angeordnete Kammern auf. Darüber hinaus weist der Extruder vorzugsweise eine der ersten Temperaturzone und/oder der ersten Kammer des Extruders vorgeschaltete Einfüllzone und eine der letzten Temperaturzone bzw. der letzten Kammer des Extruders nachgeschaltete Extrusionsdüse auf. Es liegt im Rahmen der Erfindung, dass die Temperatur in der Einfüllzone dann 20 °C bis 35 °C beträgt. Bevorzugt beträgt die Temperatur in der ersten, der Einfüllzone nachgeschalteten, insbesondere unmittelbar nachgeschalteten, Temperaturzone 25 °C bis 35 °C. Weiter bevorzugt beträgt die Temperatur in einer zweiten, der ersten Temperaturzone nachgeschalteten, insbesondere unmittelbar nachgeschalteten, Temperaturzone 50 °C bis 80 °C. Weiter bevorzugt beträgt die Temperatur in einer dritten, der zweiten Temperaturzone nachgeschalteten, insbesondere unmittelbar nachgeschalteten, Temperaturzone 58 °C bis 98 °C, vorzugsweise 60 °C bis 95 °C, bevorzugt 70 °C bis 95 °C. Bevorzugt handelt es sich bei der Temperatur in dieser dritten Temperaturzone um die Höchsttemperatur bzw. höchste Behandlungstemperatur der Mischung im Rahmen des Verfahrens und somit insbesondere um die Temperaturzone mit der höchsten Temperatur aller Temperaturzonen. Bevorzugt beträgt die Temperatur in einer vierten, der dritten Temperaturzone nachgeschalteten, insbesondere unmittelbar nachgeschalteten, Temperaturzone 40 °C bis 60 °C. Weiter bevorzugt beträgt die Temperatur in einer fünften, der vierten Temperaturzone nachgeschalteten, insbesondere unmittelbar nachgeschalteten Temperaturzone 40 °C bis 60 °C. Schließlich beträgt die Temperatur im Bereich der Extrusionsdüse zweckmäßigerweise 40 °C bis 50 °C. Es ist möglich, dass der Temperaturzone mit der höchsten Behandlungstemperatur der Mischung weitere Temperaturzonen und/oder weitere Kammern des Extruders nachgeschaltet sind, so dass sich insbesondere zumindest fünf, bevorzugt zumindest sechs, besonders bevorzugt zumindest sieben und ganz besonders bevorzugt zumindest acht Temperaturzonen und/oder Kammern des Extruders ergeben. Dann beträgt die Temperatur in diesen zusätzlichen Temperaturzonen bzw. Kammern vorzugsweise jeweils 40 °C bis 60 °C.

Es ist bevorzugt, dass die Temperatur der Temperaturzonen des Extruders, die der Einfüllzone des Extruders in Förderrichtung der Mischung durch den Extruder nachgeschaltet sind, von Temperaturzone zu Temperaturzone kontinuierlich zunimmt und ab der Temperaturzone mit der höchsten Temperatur hin zu der Extrusionsdüse des Extruders von Temperaturzone zu Temperaturzone vorzugsweise abnimmt, insbesondere kontinuierlich abnimmt.

Die Erfindung betrifft weiterhin einen Tiersnack, der mit dem oben stehend erläuterten erfindungsgemäßen Verfahren hergestellt ist und der vorzugsweise die oben stehend beschriebenen Komponenten, bevorzugt in den oben stehend beschriebenen Massenanteilen, aufweist.

Der Erfindung liegt die Erkenntnis zugrunde, dass sich der erfindungsgemäße Tiersnack durch einen optimalen Kompromiss aus Konsistenz, Geschmack und Inhaltsstoffen auszeichnet. Der Tiersnack ist zumindest fleischreduziert und gemäß bevorzugter Ausführungsform vegetarisch und ganz besonders bevorzugt vegan und wird nichtsdestoweniger von den Tieren hinsichtlich der Konsistenz und des Geschmacks akzeptiert. Darüber hinaus weist der erfindungsgemäße Tiersnack vorzugsweise einen vorteilhaft hohen Proteingehalt auf. Die Konsistenz und/oder die Struktur des Tiersnacks sind vorzugsweise fleischähnlich. Durch die Zusammenwirkung von Gluten, dem Glycerin und dem Wasser sowie des zumindest eines Füllstoffes kann eine sehr vorteilhafte Struktur und/oder Konsistenz des Tiersnacks realisiert werden, die von den Tieren akzeptiert wird und vorzugsweise gleichsam fleischähnlich ist. Durch die vorzugsweise vorgesehene zumindest eine Hefekomponente und gemäß bevorzugter Ausführungsform durch zumindest ein Additiv zur Aromatisierung und/oder zur Färbung kann der Geschmack des Tiersnacks in vorteilhafter Weise beeinflusst bzw. eingestellt werden. Die vorteilhafte Konsistenz und/oder Struktur des erfindungsgemäßen Tiersnacks wird im Rahmen des erfindungsgemäßen Verfahrens insbesondere auch durch die thermische Behandlung einer Mischung der Komponenten in einem Extruder realisiert. Dadurch liegt das strukturgebende Gluten in dem resultierenden Tiersnack bzw. in dem Endprodukt vorzugsweise zumindest teilweise in denaturierter Form vor. Da die thermische Behandlung der Mischung im Rahmen des erfindungsgemäßen Verfahrens bei vergleichsweise niedriger Temperatur erfolgt, kann eine sehr vorteilhafte Elastizität verwirklicht werden, die zu einer Konsistenz und/oder Struktur des Tiersnacks führt, die von den Tieren akzeptiert wird und besonders bevorzugt fleischähnlich ist.

Die Erfindung wird nachfolgend anhand von zwei bevorzugten Ausführungsbeispielen näher erläutert. Die beiden Ausführungsbeispiele stellen bevorzugte Ausführungsformen des erfindungsgemäßen Tiersnacks bzw. des erfindungsgemäßen Verfahrens dar.

Im Rahmen eines ersten erfindungsgemäßen Ausführungsbeispiels, das eine bevorzugte Ausführungsform der Erfindung darstellt, wurde ein veganer Tiersnack erzeugt, der aus 40 Gew.-% Weizengluten, 14 Gew.-% Glycerin, 16 Gew.-% Füllstoffen (in Form eines Fruchttresters (12 Gew.-%) und in Form eines Weizentexturates (4 Gew.-%)), 2,5 Gew.-% Bierhefe als Hefekomponente, 8 Gew.-% Wasser, 3 Gew.-% Rapsöl und 15 Gew.-% Bananenmehl sowie 1,5 Gew.-% zumindest eines Additivs zur Aromatisierung und/oder zur Färbung des Tiersnacks bestand. Der Tiersnack gemäß des ersten erfindungsgemäßen Ausführungsbeispiels wurde als Tiersnackstrang extrudiert und in Würfel geschnitten. Die Tiersnackwürfel wiesen eine Kantenlänge von etwa 12 mm auf.

Im Rahmen eines zweiten erfindungsgemäßen Ausführungsbeispiels, das eine bevorzugte Ausführungsform der Erfindung darstellt, wurde ein veganer Tiersnack erzeugt, der aus 41 Gew.-% Weizengluten, 14 Gew.-% Glycerin, 11 Gew.-% eines Weizentexturates als Füllstoff, 2 Gew.-% Bierhefe als Hefekomponente, 9 Gew.-% Wasser, 3 Gew.-% Rapsöl, 15 Gew.-% Bananenmehl und 5 Gew.-% zumindest eines Additivs zur Aromatisierung und/oder zur Färbung bestand. Der Tiersnack wurde als Tiersnackstrang extrudiert und in Tiersnackstangen geschnitten. Die Tiersnackstangen wiesen jeweils eine Länge von etwa 9,5 cm und einen Durchmesser von etwa 0,4 cm auf, wobei die Tiersnackstangen im Querschnitt rund bzw. im Wesentlichen rund ausgebildet waren.

Die Tiersnacks gemäß den beiden vorstehend beschriebenen bevorzugten erfindungsgemäßen Ausführungsbeispielen wurden mittels eines Extruders extrudiert. Dazu wurde im Ausführungsbeispiel der Doppelschneckenextruder ZSE 27 iMAXX von Leistritz eingesetzt. Die trockenen Komponenten (Weizengluten, Füllstoff bzw. Füllstoffe, Hefekomponente und stärkehaltiges Mehl sowie gegebenenfalls trockene Additive zur Aromatisierung und/oder zur Färbung) wurden im Rahmen dieser bevorzugten Ausführungsbeispiele eingewogen und in einer Mischvorrichtung homogenisiert. Der verwendete Extruder wies im Ausführungsbeispiel eine Einfüllzone sowie acht der Einfüllzone in Förderrichtung der Mischung durch den Extruder nachgeschaltete und hintereinander angeordnete Temperaturzonen auf, denen jeweils eine Kammer des Extruders zugeordnet war. Der letzten Temperaturzone und der letzten Kammer des Extruders unmittelbar nachgeschaltet war im Ausführungsbeispiel die Extrusionsdüse angeordnet und dieser wiederum nachgeschaltet war eine Schneidvorrichtung angeordnet. Dieser Schneidvorrichtung nachgeschaltet folgte im Rahmen der beiden bevorzugten Ausführungsbeispiele eine Kühlvorrichtung für den Tiersnack.

Im Rahmen des ersten bevorzugten Ausführungsbeispiels wurde die Trockenmischung dem Extruder zugeführt und in der Einfüllzone wurde auch das Wasser hinzugegeben. Die Temperatur in der Einfüllzone betrug im ersten Ausführungsbeispiel etwa 25 °C bis 30 °C. Die Mischung wurde anschließend durch den Extruder gefördert und in den Temperaturzonen bzw. den zugeordneten Kammern des Extruders thermisch behandelt. Wie oben stehend erläutert wurde, beziehen sich die hier und nachfolgend angegebenen Temperaturen der Temperaturzonen bevorzugt und im ersten Ausführungsbeispiel auf die Innenwandtemperatur in den Temperaturzonen bzw. in den zugeordneten Kammern, auf die die Innenwandung temperiert, insbesondere geheizt und/oder gekühlt, wurde. In der ersten, der Einfüllzone unmittelbar nachgeschalteten Kammer bzw. Temperaturzone betrug die Temperatur im ersten Ausführungsbeispiel etwa 30 °C bis 40 °C. In der zweiten, der ersten Temperaturzone bzw. der ersten Kammer des Extruders unmittelbar nachgeschalteten Temperaturzone bzw. Kammer betrug die Temperatur etwa 75 °C bis 85 °C. In dieser Kammer des Extruders bzw. in dieser Temperaturzone des Extruders wurden der Mischung im ersten Ausführungsbeispiel und gemäß bevorzugter Ausführungsform Glycerin und Rapsöl zugeführt. In der dritten, der zweiten Temperaturzone in Förderrichtung der Mischung durch den Extruder unmittelbar nachgeschalteten Temperaturzone bzw. Kammer des Extruders betrug die Temperatur im ersten Ausführungsbeispiel etwa 85 °C bis 95 °C. Die Temperatur in den Temperaturzonen 4, 5 und 6, die der dritten Temperaturzone in Förderrichtung der Mischung durch den Extruder nachgeschaltet bzw. unmittelbar nachgeschaltet waren, betrug im ersten Ausführungsbeispiel etwa 50 °C bis 60 °C. Die Temperatur in den Temperaturzonen 7 und 8, die der sechsten Temperaturzone in Förderrichtung der Mischung durch den Extruder nachgeschaltet bzw. unmittelbar nachgeschaltet waren, betrug im ersten Ausführungsbeispiel etwa 45 °C bis 55 °C. Die Temperatur im Bereich der Extrusionsdüse betrug im ersten Ausführungsbeispiel etwa 45 °C.

Im Rahmen des zweiten bevorzugten Ausführungsbeispiels wurde die Trockenmischung dem Extruder zugeführt und in der Einfüllzone wurde auch das Wasser hinzugegeben. Die Temperatur in der Einfüllzone betrug im zweiten Ausführungsbeispiel etwa 25 °C bis 30 °C. Die Mischung wurde anschließend durch den Extruder gefördert und in den Temperaturzonen bzw. den zugeordneten Kammern des Extruders thermisch behandelt. Wie oben stehend erläutert wurde, beziehen sich die hier und nachfolgend angegebenen Temperaturen der Temperaturzonen bevorzugt und im zweiten Ausführungsbeispiel auf die Innenwandtemperatur in den Temperaturzonen bzw. in den zugeordneten Kammern, auf die die Innenwandung temperiert, insbesondere geheizt und/oder gekühlt, wurde. In der ersten, der Einfüllzone unmittelbar nachgeschalteten Kammer bzw. Temperaturzone betrug die Temperatur im zweiten Ausführungsbeispiel etwa 30 °C bis 40 °C. In der zweiten, der ersten Temperaturzone bzw. der ersten Kammer des Extruders unmittelbar nachgeschalteten Temperaturzone bzw. Kammer betrug die Temperatur etwa 58 °C bis 65 °C. In dieser Kammer des Extruders bzw. in dieser Temperaturzone des Extruders wurden der Mischung im zweiten Ausführungsbeispiel und gemäß bevorzugter Ausführungsform Glycerin und Rapsöl zugeführt. In der dritten, der zweiten Temperaturzone in Förderrichtung der Mischung durch den Extruder unmittelbar nachgeschalteten Temperaturzone bzw. Kammer des Extruders betrug die Temperatur im zweiten Ausführungsbeispiel etwa 58 °C bis 65 °C. Die Temperatur in den Temperaturzonen 4, 5 und 6, die der dritten Temperaturzone in Förderrichtung der Mischung durch den Extruder nachgeschaltet bzw. unmittelbar nachgeschaltet waren, betrug im zweiten Ausführungsbeispiel etwa 45 °C bis 55 °C. Die Temperatur in den Temperaturzonen 7 und 8, die der sechsten Temperaturzone in Förderrichtung der Mischung durch den Extruder nachgeschaltet bzw. unmittelbar nachgeschaltet waren, betrug im zweiten Ausführungsbeispiel etwa 40 °C bis 45 °C. Die Temperatur im Bereich der Extrusionsdüse betrug im zweiten Ausführungsbeispiel etwa 45 °C.

Nachfolgend wird die Erfindung anhand einer lediglich ein Ausführungsbeispiel darstellenden Zeichnung näher erläutert.

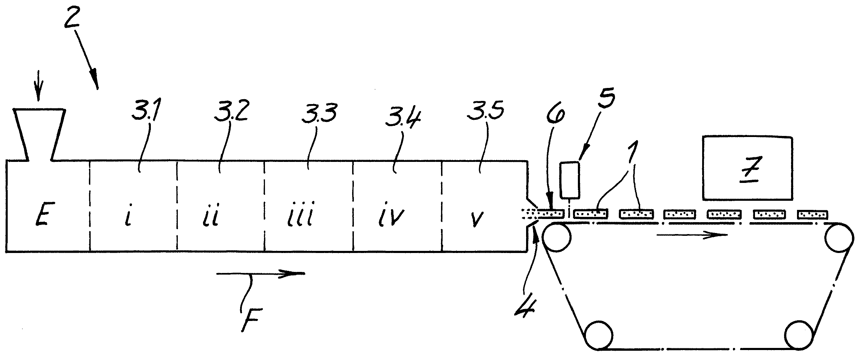

Die einzige Figur zeigt einen Extruder 2 zur Herstellung eines erfindungsgemäßen Tiersnacks 1. Bei dem Extruder 2 mag es sich um einen Doppelschneckenextruder handeln. Vorzugsweise und im Ausführungsbeispiel weist der Extruder 2 eine Einfüllzone E sowie fünf der Einfüllzone E in Förderrichtung F der Mischung durch den Extruder 2 nachgeschaltete und hintereinander angeordnete Temperaturzonen i, ii, iii, iv und v auf, denen bevorzugt und im Ausführungsbeispiel jeweils eine Kammer 3.1, 3.2, 3.3, 3.4 und 3.5 des Extruders zugeordnet ist. Der letzten Kammer 3.5 des Extruders 2 bzw. der letzten Temperaturzone v des Extruders 2 unmittelbar nachgeschaltet ist vorzugsweise und im Ausführungsbeispiel die Extrusionsdüse 4 des Extruders 2. Dieser Extrusionsdüse 4 unmittelbar nachgeschaltet ist zweckmäßigerweise und im Ausführungsbeispiel eine Schneidvorrichtung 5, die einen extrudierten Tiersnackstrang 6 in den Tiersnack 1 schneidet. Vorzugsweise und im Ausführungsbeispiel handelt es sich bei dem Tiersnack 1 um Tiersnackstangen. Der Tiersnack 1 bzw. die Tiersnackstangen werden bevorzugt und im Ausführungsbeispiel mittels einer nachgeschalteten Kühlvorrichtung 7 gekühlt.

Im Rahmen des erfindungsgemäßen Verfahrens und im Ausführungsbeispiel wird zunächst eine Trockenmischung aus zumindest Gluten, dem zumindest einen Füllstoff und vorzugsweise und im Ausführungsbeispiel der zumindest einen Hefekomponente, sowie bevorzugt und im Ausführungsbeispiel dem zumindest einen Zusatzprotein und/oder dem zumindest einen stärkehaltigen Mehl erzeugt und dem Extruder 2 in der Einfüllzone E zugeführt. In dieser Einfüllzone E wird der Mischung zudem bevorzugt und im Ausführungsbeispiel Wasser zugeführt. Das ist in der Figur nicht näher dargestellt.

Die Mischung wird in Förderrichtung F durch die hintereinandergeschalteten Temperaturzonen i, ii, iii, iv, und v bzw. die zugeordneten Kammern 3.1, 3.2, 3.3, 3.4 und 3.5 des Extruders 2 gefördert und dort thermisch behandelt. Zweckmäßigerweise und im Ausführungsbeispiel wird der Mischung dabei in der zweiten Temperaturzone ii bzw. in der zweiten Kammer 3.2 des Extruders 2 Glycerin und ein flüssiges bzw. verflüssigtes Fett zugeführt. Das ist in der Figur nicht näher dargestellt.

Bevorzugt und im Ausführungsbeispiel ist die Temperatur in jeder der Temperaturzonen des Extruders höher als 23 °C und geringer als 99 °C. Bevorzugt und im Ausführungsbeispiel beträgt die Temperatur in der Einfüllzone, die keine Temperaturzone im Sinne des erfindungsgemäßen Verfahrens ist und in der die Temperatur vorwiegend von der Umgebungstemperatur und der Temperatur der Mischungskomponenten abhängt, etwa 25 °C. Zweckmäßigerweise und im Ausführungsbeispiel mag die Temperatur in der ersten Temperaturzone i bzw. in der ersten Kammer 3.1 des Extruders 2 etwa 35 °C betragen. Weiter bevorzugt und im Ausführungsbeispiel mag die Temperatur in der zweiten Temperaturzone ii bzw. in der zweiten Kammer 3.2 des Extruders 2 etwa 75 °C betragen. Temperatur der Temperaturzone bzw. der Kammer meint dabei im Rahmen der Erfindung im Übrigen insbesondere die Temperatur der Innenwandung der jeweiligen Kammer. Vorzugsweise und im Ausführungsbeispiel gemäß der Figur mag die Temperatur in der dritten Temperaturzone iii bzw. in der dritten Kammer 3.3 des Extruders 2 etwa 90 °C betragen. Weiter bevorzugt und im Ausführungsbeispiel mag die Temperatur in der vierten Temperaturzone iv bzw. in der vierten Kammer 3.4 des Extruders 2 etwa 55 °C und in der fünften Temperaturzone v bzw. in der fünften Kammer 3.5 des Extruders 2 etwa 50 °C betragen. Die Temperatur im Bereich der Extrusionsdüse 4 mag im Ausführungsbeispiel und gemäß bevorzugter Ausführungsform etwa 45 °C betragen. Der extrudierte Tiersnackstrang 6 wird mittels der Schneidvorrichtung 5 vorzugsweise und im Ausführungsbeispiel in den Tiersnack 1 bzw. in Tiersnackstangen geschnitten und mittels der Kühlvorrichtung 7 gekühlt. Anschließend kann der Tiersnack 1 verpackt werden. Der erfindungsgemäße Tiersnack 1 zeichnet sich durch einen optimalen Kompromiss aus Konsistenz, Geschmack und Inhaltsstoffen, insbesondere durch einen hohen Proteingehalt, aus.

## Patentansprüche

1. Tiersnack, insbesondere Heimtiersnack, wobei der Tiersnack (1)
- 20 bis 55 Gew.-%, vorzugsweise 25 bis 50 Gew.-%, Gluten,
- 3 bis 25 Gew.-%, vorzugsweise 5 bis 20 Gew.-%, Glycerin,
- 1 bis 20 Gew.-%, vorzugsweise 2 bis 18 Gew.-%, zumindest eines Füllstoffes,
- vorzugsweise 0,5 bis 12 Gew.-%, bevorzugt 1 bis 10 Gew.-%, zumindest einer Hefekomponente und
- weniger als 14 Gew.-%, vorzugsweise weniger als 12 Gew.-%, Wasser
aufweist.

2. Tiersnack nach Anspruch 1, wobei der Tiersnack (1) ein vegetarischer Tiersnack (1), vorzugsweise ein veganer Tiersnack (1), ist.

3. Tiersnack nach einem der Ansprüche 1 oder 2, wobei der Tiersnack (1) einen Rohproteingehalt von mehr als 23 Gew.-%, vorzugsweise von mehr als 25 Gew.-%, bevorzugt von mehr als 30 Gew.-%, sehr bevorzugt von mehr als 35 Gew.-%, aufweist.

4. Tiersnack nach einem der Ansprüche 1 bis 3, wobei der Tiersnack (1) 0,2 bis 10 Gew.-%, vorzugsweise 0,5 bis 8 Gew.-%, bevorzugt 1 bis 7 Gew.-%, weiter bevorzugt 2 bis 6 Gew.-%, beispielsweise 3 bis 6 Gew.-%, zumindest eines Fettes aufweist.

5. Tiersnack nach Anspruch 4, wobei es sich bei dem zumindest einen Fett um zumindest ein pflanzliches Fett, vorzugsweise um Rapsöl und/oder Sonnenblumenöl und/oder Kokosfett, handelt.

6. Tiersnack nach einem der Ansprüche 1 bis 5, wobei der zumindest eine Füllstoff zumindest ein pflanzliches Texturat, bevorzugt zumindest ein Weizentexturat, und/oder zumindest ein pflanzlicher Trester, bevorzugt zumindest ein Frucht- und/oder Gemüsetrester, ist.

7. Tiersnack nach einem der Ansprüche 1 bis 6, wobei es sich bei der zumindest einen Hefekomponente um Bierhefe und/oder um Hefeextrakt und/oder um Hefeflocken handelt.

8. Tiersnack nach einem der Ansprüche 1 bis 7, wobei der Tiersnack (1) 1 bis 20 Gew.-% zumindest eines Zusatzproteins und/oder 1 bis 20 Gew.-% zumindest eines stärkehaltigen Mehls aufweist, wobei das zumindest eine Zusatzprotein vorzugsweise zumindest ein aus der Gruppe: "Erbsenprotein, Reisprotein, Kartoffelprotein" ausgewähltes Zusatzprotein ist und wobei das zumindest eine stärkehaltige Mehl vorzugsweise zumindest ein aus der Gruppe: "Kartoffelmehl, Karottenmehl, Bananenmehl, Kirchererbsenmehl, Maismehl, Reismehl, Ackerbohnenmehl" ausgewähltes stärkehaltiges Mehl ist.

9. Verfahren zur Herstellung eines Tiersnacks, vorzugsweise eines Heimtiersnacks, - insbesondere eines Tiersnacks (1) nach einem der Ansprüche 1 bis 8 - wobei der Tiersnack (1) mittels zumindest eines Extruders (2) erzeugt, insbesondere extrudiert, wird, wobei dazu eine Mischung aus zumindest Gluten, zumindest einem Füllstoff, Wasser und vorzugsweise zumindest einer Hefekomponente durch den Extruder (2) gefördert wird, wobei die Mischung außerdem Glycerin aufweist und/oder wobei der Mischung - vorzugsweise in dem Extruder (2) - Glycerin zugegeben wird, wobei der Extruder zumindest zwei, vorzugsweise zumindest drei, in Förderrichtung F der Mischung durch den Extruder (2) hintereinander angeordnete Temperaturzonen aufweist, in denen die Mischung thermisch behandelt wird und wobei die Temperatur in jeder der Temperaturzonen des Extruders (2) geringer ist als 99 °C, insbesondere geringer ist als 97 °C, vorzugsweise geringer ist als 95 °C, bevorzugt geringer ist als 90 °C, weiter bevorzugt geringer ist als 80 °C, sehr bevorzugt geringer ist als 75 °C, besonders bevorzugt geringer ist als 70 °C, ganz besonders bevorzugt geringer ist als 65 °C, beispielsweise geringer ist als 60 °C.

10. Verfahren nach Anspruch 9, wobei zunächst eine Trockenmischung aus zumindest Gluten, dem zumindest einen Füllstoff und vorzugsweise der zumindest einen Hefekomponente - sowie bevorzugt zumindest einem Zusatzprotein und/oder zumindest einem stärkehaltigen Mehl und/oder zumindest einem Additiv zur Aromatisierung und/oder zur Färbung des Tiersnacks (1) - erzeugt und dem Extruder (2) zugeführt wird und wobei der Trockenmischung, vorzugsweise in dem Extruder (2), zumindest Wasser und - vorzugsweise der Wasserzugabe nachgeschaltet - Glycerin und bevorzugt zumindest ein flüssiges bzw. verflüssigtes Fett zugeführt wird.

11. Verfahren nach einem der Ansprüche 9 oder 10, wobei der Extruder (2) zumindest vier, bevorzugt zumindest fünf, besonders bevorzugt zumindest sechs, ganz besonders bevorzugt zumindest sieben, beispielsweise acht, Temperaturzonen aufweist.

12. Verfahren nach einem der Ansprüche 9 bis 11, wobei jeder Temperaturzone des Extruders jeweils zumindest eine Kammer (3), insbesondere eine Kammer (3), des Extruders (2) zugeordnet ist, wobei die Kammern (3) in Förderrichtung F der Mischung durch den Extruder (2) hintereinander angeordnet sind.

13. Verfahren nach einem der Ansprüche 9 bis 12, wobei die Temperatur in jeder der Temperaturzonen des Extruders (2) höher ist als 23 °C, vorzugsweise höher ist als 25 °C, bevorzugt höher ist als 27 °C.

14. Verfahren nach einem der Ansprüche 9 bis 13, wobei die Temperatur in zumindest einer Temperaturzone des Extruders (2) zumindest 58 °C, insbesondere zumindest 60 °C, vorzugsweise zumindest 65 °C, bevorzugt zumindest 70 °C, besonders bevorzugt zumindest 75 °C, ganz besonders bevorzugt zumindest 80 °C, weiter bevorzugt zumindest 85 °C, weiter bevorzugt zumindest 90 °C, beispielsweise zumindest 95 °C, beträgt.

15. Verfahren nach einem der Ansprüche 9 bis 14, wobei der Extruder (2) zumindest drei Temperaturzonen aufweist, wobei die Temperatur in einer ersten Temperaturzone geringer ist als die Temperatur in einer zweiten, der ersten Temperaturzone in Förderrichtung F der Mischung durch den Extruder (2) nachgeschalteten Temperaturzone und wobei die Temperatur in einer dritten, der zweiten Temperaturzone in Förderrichtung F der Mischung durch den Extruder (2) nachgeschalteten Temperaturzone vorzugsweise geringer ist als die Temperatur in der zweiten Temperaturzone und besonders bevorzugt höher ist als die Temperatur in der ersten Temperaturzone.

16. Verfahren nach Anspruch 15, wobei die Temperatur in der ersten Temperaturzone 23 °C bis 40 °C, vorzugsweise 25 °C bis 35 °C, beträgt und/oder wobei die Temperatur in der zweiten Temperaturzone 55 °C bis 98 °C, insbesondere 58 °C bis 98 °C, vorzugsweise 60 °C bis 95 °C, bevorzugt 70 °C bis 95 °C, beträgt, und/oder wobei die Temperatur in der dritten Temperaturzone 40 °C bis 60 °C, vorzugsweise 40 °C bis 55 °C, beträgt.

17. Verfahren nach einem der Ansprüche 9 bis 16, wobei ein Tiersnackstrang (6) extrudiert und - vorzugsweise unmittelbar nach dem Austritt aus einer Extrusionsdüse (4) des Extruders (2) - in den Tiersnack (1), vorzugsweise in Tiersnackstangen und/oder in Tiersnackwürfel, getrennt, insbesondere geschnitten, wird.

18. Verfahren nach einem der Ansprüche 9 bis 17, wobei der Tiersnack (1) mit einem Durchsatz von 15 kg/h bis 50 kg/h, vorzugsweise von 20 kg/h bis 45 kg/h, erzeugt bzw. extrudiert wird.

## Geänderte Patentansprüche

### Geänderte Patentansprüche gemäss Regel 137(2) EPÜ.

1. Tiersnack, insbesondere Heimtiersnack, wobei der Tiersnack (1)
- 20 bis 55 Gew.-%, vorzugsweise 25 bis 50 Gew.-%, Gluten,
- 3 bis 25 Gew.-%, vorzugsweise 5 bis 20 Gew.-%, Glycerin,
- 1 bis 20 Gew.-%, vorzugsweise 2 bis 18 Gew.-%, zumindest eines Füllstoffes, wobei der zumindest eine Füllstoff zumindest ein pflanzliches Texturat und/oder zumindest ein pflanzlicher Trester ist
- vorzugsweise 0,5 bis 12 Gew.-%, bevorzugt 1 bis 10 Gew.-%, zumindest einer Hefekomponente und
- weniger als 12 Gew.-% Wasser
aufweist.

2. Tiersnack nach Anspruch 1, wobei der Tiersnack (1) ein vegetarischer Tiersnack (1), vorzugsweise ein veganer Tiersnack (1), ist.

3. Tiersnack nach einem der Ansprüche 1 oder 2, wobei der Tiersnack (1) einen Rohproteingehalt von mehr als 23 Gew.-%, vorzugsweise von mehr als 25 Gew.-%, bevorzugt von mehr als 30 Gew.-%, sehr bevorzugt von mehr als 35 Gew.-%, aufweist.

4. Tiersnack nach einem der Ansprüche 1 bis 3, wobei der Tiersnack (1) 0,2 bis 10 Gew.-%, vorzugsweise 0,5 bis 8 Gew.-%, bevorzugt 1 bis 7 Gew.-%, weiter bevorzugt 2 bis 6 Gew.-%, beispielsweise 3 bis 6 Gew.-%, zumindest eines Fettes aufweist.

5. Tiersnack nach Anspruch 4, wobei es sich bei dem zumindest einen Fett um zumindest ein pflanzliches Fett, vorzugsweise um Rapsöl und/oder Sonnenblumenöl und/oder Kokosfett, handelt.

6. Tiersnack nach einem der Ansprüche 1 bis 5, wobei der zumindest eine Füllstoff zumindest ein Weizentexturat und/oder zumindest ein Frucht- und/oder Gemüsetrester ist.

7. Tiersnack nach einem der Ansprüche 1 bis 6, wobei es sich bei der zumindest einen Hefekomponente um Bierhefe und/oder um Hefeextrakt und/oder um Hefeflocken handelt.

8. Tiersnack nach einem der Ansprüche 1 bis 7, wobei der Tiersnack (1) 1 bis 20 Gew.-% zumindest eines Zusatzproteins und/oder 1 bis 20 Gew.-% zumindest eines stärkehaltigen Mehls aufweist, wobei das zumindest eine Zusatzprotein vorzugsweise zumindest ein aus der Gruppe: "Erbsenprotein, Reisprotein, Kartoffelprotein" ausgewähltes Zusatzprotein ist und wobei das zumindest eine stärkehaltige Mehl vorzugsweise zumindest ein aus der Gruppe: "Kartoffelmehl, Karottenmehl, Bananenmehl, Kirchererbsenmehl, Maismehl, Reismehl, Ackerbohnenmehl" ausgewähltes stärkehaltiges Mehl ist.

9. Verfahren zur Herstellung eines Tiersnacks (1), vorzugsweise eines Heimtiersnacks, nach einem der Ansprüche 1 bis 8, wobei der Tiersnack (1) mittels zumindest eines Extruders (2) erzeugt, insbesondere extrudiert, wird, wobei dazu eine Mischung aus zumindest Gluten, zumindest einem Füllstoff, Wasser und vorzugsweise zumindest einer Hefekomponente durch den Extruder (2) gefördert wird, wobei die Mischung außerdem Glycerin aufweist und/oder wobei der Mischung - vorzugsweise in dem Extruder (2) - Glycerin zugegeben wird, wobei der Extruder zumindest zwei, vorzugsweise zumindest drei, in Förderrichtung F der Mischung durch den Extruder (2) hintereinander angeordnete Temperaturzonen aufweist, in denen die Mischung thermisch behandelt wird und wobei die Temperatur in jeder der Temperaturzonen des Extruders (2) geringer ist als 99 °C, insbesondere geringer ist als 97 °C, vorzugsweise geringer ist als 95 °C, bevorzugt geringer ist als 90 °C, weiter bevorzugt geringer ist als 80 °C, sehr bevorzugt geringer ist als 75 °C, besonders bevorzugt geringer ist als 70 °C, ganz besonders bevorzugt geringer ist als 65 °C, beispielsweise geringer ist als 60 °C.

10. Verfahren nach Anspruch 9, wobei zunächst eine Trockenmischung aus zumindest Gluten, dem zumindest einen Füllstoff und vorzugsweise der zumindest einen Hefekomponente - sowie bevorzugt zumindest einem Zusatzprotein und/oder zumindest einem stärkehaltigen Mehl und/oder zumindest einem Additiv zur Aromatisierung und/oder zur Färbung des Tiersnacks (1) - erzeugt und dem Extruder (2) zugeführt wird und wobei der Trockenmischung, vorzugsweise in dem Extruder (2), zumindest Wasser und - vorzugsweise der Wasserzugabe nachgeschaltet - Glycerin und bevorzugt zumindest ein flüssiges bzw. verflüssigtes Fett zugeführt wird.

11. Verfahren nach einem der Ansprüche 9 oder 10, wobei der Extruder (2) zumindest vier, bevorzugt zumindest fünf, besonders bevorzugt zumindest sechs, ganz besonders bevorzugt zumindest sieben, beispielsweise acht, Temperaturzonen aufweist.

12. Verfahren nach einem der Ansprüche 9 bis 11, wobei jeder Temperaturzone des Extruders jeweils zumindest eine Kammer (3), insbesondere eine Kammer (3), des Extruders (2) zugeordnet ist, wobei die Kammern (3) in Förderrichtung F der Mischung durch den Extruder (2) hintereinander angeordnet sind.

13. Verfahren nach einem der Ansprüche 9 bis 12, wobei die Temperatur in jeder der Temperaturzonen des Extruders (2) höher ist als 23 °C, vorzugsweise höher ist als 25 °C, bevorzugt höher ist als 27 °C.

14. Verfahren nach einem der Ansprüche 9 bis 13, wobei die Temperatur in zumindest einer Temperaturzone des Extruders (2) zumindest 58 °C, insbesondere zumindest 60 °C, vorzugsweise zumindest 65 °C, bevorzugt zumindest 70 °C, besonders bevorzugt zumindest 75 °C, ganz besonders bevorzugt zumindest 80 °C, weiter bevorzugt zumindest 85 °C, weiter bevorzugt zumindest 90 °C, beispielsweise zumindest 95 °C, beträgt.

15. Verfahren nach einem der Ansprüche 9 bis 14, wobei der Extruder (2) zumindest drei Temperaturzonen aufweist, wobei die Temperatur in einer ersten Temperaturzone geringer ist als die Temperatur in einer zweiten, der ersten Temperaturzone in Förderrichtung F der Mischung durch den Extruder (2) nachgeschalteten Temperaturzone und wobei die Temperatur in einer dritten, der zweiten Temperaturzone in Förderrichtung F der Mischung durch den Extruder (2) nachgeschalteten Temperaturzone vorzugsweise geringer ist als die Temperatur in der zweiten Temperaturzone und besonders bevorzugt höher ist als die Temperatur in der ersten Temperaturzone.

16. Verfahren nach Anspruch 15, wobei die Temperatur in der ersten Temperaturzone 23 °C bis 40 °C, vorzugsweise 25 °C bis 35 °C, beträgt und/oder wobei die Temperatur in der zweiten Temperaturzone 55 °C bis 98 °C, insbesondere 58 °C bis 98 °C, vorzugsweise 60 °C bis 95 °C, bevorzugt 70 °C bis 95 °C, beträgt, und/oder wobei die Temperatur in der dritten Temperaturzone 40 °C bis 60 °C, vorzugsweise 40 °C bis 55 °C, beträgt.

17. Verfahren nach einem der Ansprüche 9 bis 16, wobei ein Tiersnackstrang (6) extrudiert und - vorzugsweise unmittelbar nach dem Austritt aus einer Extrusionsdüse (4) des Extruders (2) - in den Tiersnack (1), vorzugsweise in Tiersnackstangen und/oder in Tiersnackwürfel, getrennt, insbesondere geschnitten, wird.

18. Verfahren nach einem der Ansprüche 9 bis 17, wobei der Tiersnack (1) mit einem Durchsatz von 15 kg/h bis 50 kg/h, vorzugsweise von 20 kg/h bis 45 kg/h, erzeugt bzw. extrudiert wird.
